# EUROPÄISCHE PATENTSCHRIFT

(11) **EP 0 586 865 B1**
(45) Veröffentlichungstag und Bekanntmachung des Hinweises auf die Patenterteilung: **15.07.1998**
(21) Anmeldenummer: 93112127.1
(22) Anmeldetag: 29.07.1993
(51) Int. Cl.: E03F 5/14, E02B 8/02, B01D 33/04

(54) **Reiniger für Stabrechen**
Cleaner for bar screens
Nettoyeur pour grilles à barreaux

(30) Priorität: 20.08.1992 DE 4227556
(43) Veröffentlichungstag der Anmeldung: 16.03.1994
(73) Patentinhaber: PASSAVANT-WERKE AG, 65322 Aarbergen 7 (DE)
(72) Erfinder: Egert, Robert, D-65558 Burgschwalbach (DE); Ferencek, Zvonimir, D-65232 Taunusstein 1 (DE); Kettenbach, Karl, D-65326 Aarbergen 2 (DE); Scheid, Klaus, Dipl.-Ing., D-65597 Hünfelden 1 (DE); Schwenk, Reinhold, D-65326 Aarbergen 3 (DE); Städler, Alexander, Dipl.-Ing., D-65326 Aarbergen 2 (DE); Staudt, Herwig, Dipl.-Ing., D-65549 Limburg 1 (DE); Weber, Ernst-Joachim, D-65558 Burgschwalbach (DE); Hungershausen, Walter, Dipl.-Ing., D-65549 Limburg 9 (DE); Hosseinpour-Tabrizi, Siavash, Dipl.-Ing., D-60386 Frankfurt 60 (DE)

(56) Entgegenhaltungen:
- DE-U- 8 703 806
- GB-A- 573 649
- GB-A- 2 104 402
- US-A- 4 188 294
- PATENT ABSTRACTS OF JAPAN vol. 14, no. 71 (M-933)(4014) 9. Februar 1990 & JP-A-01 290 812 (HITACHI PLANT ENG. & CONSTR. CO LTD)
- PATENT ABSTRACTS OF JAPAN vol. 6, no. 130 (M-143)(1008) 16. Juli 1982 & JP-A-57 054 613 (TAKATOSHI HIBI)
- PATENT ABSTRACTS OF JAPAN vol. 6, no. 232 (M-172)(1110) 18. November 1982 & JP-A-57 133 914 (NISHIDA TETSUKOU K.K.)

## Beschreibung

Die Erfindung betrifft in Gerinne eingebaute Stabrechen zur Entnahme von mitgeschwemmtem Rechengut. Die Stabrechen werden durch an den Roststäben aufwärts geführte Reinigerharken geräumt, die an über mehrere Umlenkstationen geführten Endlosketten befestigt sind. Bei der ersten Umlenkung in die Horizontale wird das Rechengut auf eine darunterliegende Schurre abgeworfen und abgeführt.

Es ist bekannt, die Endlos-Ketten oberhalb des Stabrechens oder eines ihn fortsetzenden Leitblechs in Ausströmrichtung hinter den Stabrechen umzulenken und das Rechengut über die Harkenspitzen abzuwerfen (DE-OS 33 34 586). Bei einem anderen bekannten Stabrechen mit an Endlosketten befestigten Reinigerharken werden die Endlosketten sofort nach rückwärts umgelenkt (DE-PS 305 274). Hier wird das Rechengut über die Hinterkante der Reinigerharke abgeworfen. Diese Ausführung berücksichtigt nicht, daß sich auch an der Vorderkante der Reinigerharke insbesondere faden- und streifenförmiges Rechengut sammelt, das dann aber nicht abgeworfen werden kann.

Bei einem weiteren bekannten Gegenstrom-Stabrechen mit an Endlosketten befestigten Reinigerharken werden die Endlosketten über eine obere Rückführumlenkung etwa horizontal umgelenkt (GB-A-2 104 402). Hier wird das Rechengut über die hochgezogenen und mehrfach gebogenen Roststäbe an einer Stelle über die Vorderkante der ausdrehenden Reinigerharke abgestreift und abgeworfen. Diese Ausführung ist aber nicht für Mitstrom-Stabrechen und eine zuverlässige Reinigung geeignet, weil es nicht berücksichtigt, daß abgestreiftes Rechengut an der Schurre vorbei in das Gerinne hinter den Stabrechen fällt.

Der Aufgabe, diese Nachteile zu vermeiden, liegt die Überlegung zugrunde, die Endlosketten so zu führen und umzulenken, daß über beide Kanten Rechengut abgeworfen werden kann. Die Lösung der Aufgabe besteht demnach darin, zwischen der oberen Rückführumlenkung und der vor dem Fuß des Stabrechens liegenden Aufwärtsumlenkung eine weitere entgegengesetzt verlaufende Umlenkung vorzusehen, die so angeordnet ist, daß die Reinigerharken bis zu dieser Umlenkung etwa horizontal bewegt werden, wodurch nunmehr Rechengut über die Vorderkante abgeworfen werden kann. Die Schurre, die das Rechengut an der ersten Abwurfstelle aufnimmt, endet vor diesem horizontalen Kettenabschnitt; sie wird aber unterhalb fortgesetzt, und zwar mit einer bestimmten Überlappung, so daß sowohl das von oben kommende Rechengut als auch das dort abgeworfene Rechengut einwandfrei abgeführt werden kann.

Um den Abwurf an der ersten Abwurfstelle zu unterstützen, kann in Ausgestaltung der Erfindung dort eine Abspritzung stattfinden mit schräg von oben angebrachten Sprühstrahlen.

Auch ein mechanisches Abschieben des Rechengutes kann vorgesehen werden, und zwar mit Hilfe einer um eine Horizontalachse rotierenden Walzenbürste, die an unten schwenkbar gelagerten Schwenkarmen befestigt ist. Die Walzenbürste wird somit von den Reinigerharken bis zum Ausweichen mitgenommen und streift dabei das Rechengut nach unten ab. Eine Rückholfeder sorgt dafür, daß die Walzenbürste wieder in die Arbeitsstellung für die nächste Reinigerharke schwenkt.

Weitere bauliche Ausgestaltungen des neuen Rechenreinigers sind den Unteransprüchen und der nachfolgenden Beschreibung einer bevorzugten Ausführungsform zu entnehmen.

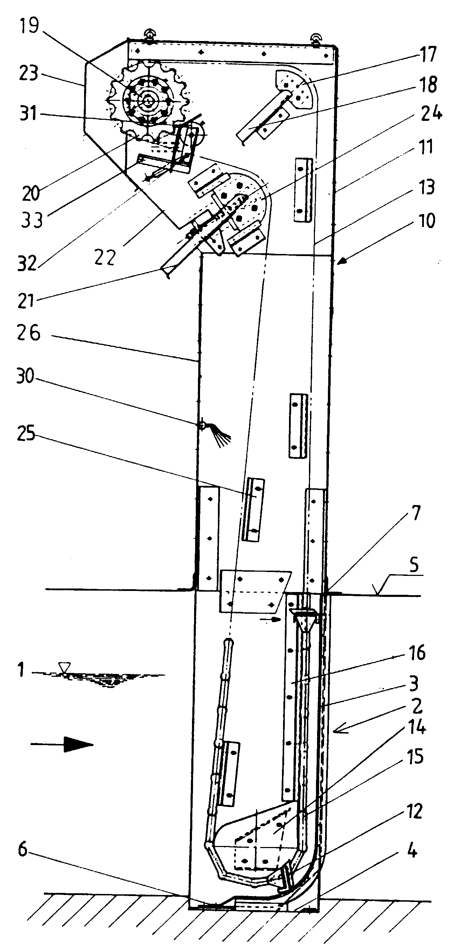

Die Figur zeigt die Seitenansicht des in ein Gerinne 1 eingebauten Rechens 2. Die Rechenstäbe 3 beginnen in viertelkreisgebogener Form an der Sohle 4 des Gerinnes und reichen bis in Höhe der Gerinnekrone 5. Die Befestigung erfolgt unten an einem Sohleisen 6 und oben an einem das Gerinne überspannenden Profilträger 7.

Der Rechenreiniger 10 ist in einem Gehäuse 11 untergebracht, das den Rechen überdeckt. Eine beliebige Zahl von Reinigerharken 12 ist undrehbar an angetrieben umlaufenden Endlos-Ketten 13 befestigt. Der Eingriff der Reinigerharke 12 wird durch untere halbkreisbogenförmige Kulissen 14 erzielt, an denen die Rollen 15 der Endlos-Ketten abrollen. Auf dem vertikalen Rechenabschnitt wird der Eingriff durch rückwärtige Leitbahnen 16 sichergestellt.

Oben werden die Endlos-Ketten um insgesamt drei Umlenkstationen geführt: die Umlenkung in die Horizontale erfolgt über dem Rechen durch eine Viertelkreis-Umlenkkulisse 17, hinter der demnach die erste Abwurfstelle liegt. Das abgeworfene Rechengut wird von einer dort beginnenden Schurre 18 aufgenommen. Hinten sorgt die (angetriebene) Halbkreis-Umlenkung 19 (mit Kettenrädern 20) dafür, daß jetzt die Vorderkanten der Reinigerharken nach unten weisen und das dort haftende Rechengut noch abgeworfen wird. Dieses Rechengut nimmt der untere Abschnitt 21 der Schurre auf. Sollte schon vorzeitig Rechengut abfallen, so wird dies vom Boden 22 der Gehäuse-Ausbuchtung 23 aufgefangen und auf den unteren Abschnitt 21 der Schurre geleitet.

Zwischen den beiden Schurrenabschnitten liegt eine weitere Viertelkreis-Umlenkung 24 in Form einer Kulisse, die die Reinigerharke wieder zurück zum Rechenfuß führt. Auch dort kann eine Leitbahn 25 vorgesehen sein, die ggf. die Spannstation für die Endlos-Ketten trägt.

An der Rückwand 26 des Gehäuses 11 ist eine Sprüheinrichtung 30 angebracht, die die Vorderseite der Reinigerharke im Vorbeilauf abspritzt. Zwischen den beiden oberen Umlenkstationen 19, 24 liegt eine horizontalachsige Walzenbürste 31, die von einem nicht dargestellten Getriebemotor angetrieben wird. Die Drehachse ist an Schwenkarmen 32 gelagert, welche ihrerseits in Schwenklagern 33 abgestützt sind. Eine an den Schwenkarmen 32 angreifende Gasdruckfeder 34 dient als Rückholfeder.Bei der Annäherung einer Reinigerharke wird deren Vorderseite fortlaufend abgebürstet, wobei die Walzenbürste bis zum vollständigen unteren Ausgriff mitgenommen wird.

## Patentansprüche

1. Reiniger für im Gerinne angeordnete Stabrechen, enthaltend mehrere an angetrieben umlaufenden Endlosketten (13) befestigte Reinigerharken (12), die derart über Umlenkstationen geführt werden, daß sie aufwärts am Stabrechen vorbeibewegt und an zu einer über dem Stabrechen liegenden Viertelkreis-Rückwärtsumlenkung (17) mit Abwurf des Rechengutes auf eine darunter vorgesehene Schurre (18,21) hinbewegt werden, daß zwischen der oberen Rückführumlenkung (19) und der vor dem Fuß des Stabrechens (3) liegenden Aufwärtsumlenkung (14) eine weitere entgegengesetzt verlaufende Umlenkung (24) vorgesehen ist, die so angeordnet ist, daß die Reinigerharken (12) bis zu ihr etwa horizontal bewegt werden, **dadurch gekennzeichnet** daß das Rechengut zwischen der Viertelkreis-Rückwärtsumlenkung (17) und der oberen Rückführumlenkung (19) über die hintere Kante der Reinigerharken (12) und zwischen der oberen Rückführumlenkung (19) und der entgegengesetzt verlaufenden Umlenkung (24) über ihre Vorderkante (18) abgeworfen werden kann.

2. Reiniger nach Anspruch 1, **dadurch gekennzeichnet,** daß ein oberer Schurren-abschnitt (18) zwischen der Viertelkreis-Rückwärtsumlenkung (17) und der oberen Rückführumlenkung (19) und ein unterer Schurrenabschnitt (21) unterhalb des etwa horizontal durchlaufenen Kettenabschnitts zwischen der oberen Rückführ-umlenkung (19) und der entgegengesetzt verlaufenden Umlenkung (24) vorgesehen ist.

3. Reiniger nach Anspruch 1 und 2, **dadurch gekennzeichnet,** daß der obere Schurrenabschnitt (18) den unteren Schurrenabschnitt (21) überlappt.

4. Reiniger nach Anspruch 1 bis 3, **dadurch gekennzeichnet,** daß der Antrieb für die Endlos-Ketten (13) an der oberen Rückführ-Umlenkung (19) liegt.

5. Reiniger nach anspruch 4, **dadurch gekennzeichnt,** daß die Endlos-Ketten (13) an der Antriebs-Station (19) über Kettenräder (20) geführt sind.

6. Reiniger nach Anspruch 5, **dadurch gekennzeichnet,** daß die Endlos-Ketten (13) Rollen (15) aufweisen und an den übrigen Umlenkstationen über Bogenkulissen (14, 17, 24) geführt sind.

7. Reiniger nach Anspruch 6, **dadurch gekennzeichnet,** daß die weitere entgengegesetzt verlaufende Umlenkung (24) zum Nachspannen der Endlos-Ketten (13) nach innen verstellbar geführt ist.

8. Reiniger nach Anspruch 1 bis 8, **dadurch gekennzeichnet,** daß unter der hinten Rückführ-Umlenkung (19) eine weitere Schurre (22) liegt, die auf den unteren Schurren-Abschnitt (21) mündet.

9. Reiniger nach Anspruch 8, **gekennzeichnet** durch eine im Anschluß an die obere Rückführumlenkung (19) vorgesehene, Bürste (31), die oberhalb der Endlos-Ketten (13) liegt und mittels Schwenkarmen (32) in einem unteren Lager (33) gelagert ist, das ihr ein mitfahrendes Ausweichen bis zum Ausgriff ermöglicht.

10. Reiniger nach Anspruch 9, **gekennzeichnet** durch eine Rückholfeder (34) für die Schwenkarme (32).

## Claims

1. Trash rack cleaner for bar screens installed in a channel, consisting of several cleaning rakes (12) which are fixed to motorized rotating endless chains (13) directed across deflecting stations so that the rakes move upward along the screen bars until reaching a quarter-circle backward deflection (17) positioned above the bar screen rack, where the screenings are discharged onto a chute arranged below (18, 21), and that an additional inversing deflection (24) positioned in a way that, up to this point, the cleaning rakes (12) move mostly horizontally, is placed between the upper backward deflection (19) and the lower upward deflection (14) located in front of the bar screen base (3), **characterized in that** the screenings can be discharged between the quarter-circle backward deflection (17) and the upper backward deflection (19) across the rear edge of the cleaning rakes (12) and across their front edge between the upper backward deflection (19) and the inversing deflection (24).

2. Trash rack cleaner according to claim 1, **characterized in that** an upper chute section (18) is provided between the quarter-circle backward deflection (17) and the upper backward deflection (19) and a lower chute section (21) underneath the mostly horizontal chain section located between the upper backward deflection (19) and the inversing deflection (24).

3. Trash rack cleaner according to claim 1 and 2, **characterized in that** the upper chute section (18) is overlapping the lower chute section (21).

4. Trash rack cleaner according to the claims 1 through 3, **characterized in that** the drive unit for the endless chains (13) is positioned at the upper backward deflecting station (19).

5. Trash rack cleaner according to claim 4, **characterized in that** the endless chains (13) are directed across chain wheels (20) at the drive station (19).

6. Trash rack cleaner according to claim 5, **characterized in that** the endless chains (13) are provided with chain rollers (15) and that they are directed along arched cranks (14, 17, 24) at the other deflecting stations.

7. Trash rack cleaner according to claim 6, **characterized in that** the additional inversing deflection (24) may be adjusted to the inside in order to control the tension of the endless chains (13).

8. Trash rack cleaner according to the claims 1 through 8, **characterized in that** an additional chute (22) is arranged underneath the backward deflection (19) which ends at the lower chute section (21).

9. Trash rack cleaner according to claim 8, **characterized by** a brush roll (31) which is provided in connection with the upper backward deflection (19) and which is placed above the endless chains (13) and supported via pivoting arms (32) in a lower bearing (33) allowing to be carried along until disengagement of the rake tips.

10. Trash rack cleaner according to claim 9, **characterized by** a return spring (34) for the pivoting arms (32).

## Revendications

1. Dégrilleur pour les grilles à barreaux installées dans un conduit, incluyant plusieurs râteaux dégrilleurs (12) fixés à des chaînes sans fins motorizées (13) lesquelles sont guidées à travers des stations de renvoi de manière que les râteaux dégrilleurs montent le long de la grille à barreaux jusqu'à arrivant à une station de renvoi d'un quart de cercle (17) se trouvant en-dessus de la grille à barreaux où les déchets de dégrillage sont déchargés sur une tôle de rejet (18. 21) prévue en-dessous, qu'une station de renvoi additionelle (24) inversant le sens de marche (24) est prévue entre la station de renvoi supérieure (19) et la station de renvoi inférieure située devant la base de la grille à barreaux (3) laquelle est placée de manière que les râteaux dégrilleurs se déplacent presque horizontalement jusqu'à cette station de renvoi, **caractérisé en ce que** les déchets de dégrillage sont déchargés à travers du bord arrière des râteaux dégrilleurs (12) entre la station de renvoi d'un quart de cercle (17) et la station de renvoi supérieure (19) et à travers du bord devant (18) entre la station de renvoi supérieure (19) et la station de renvoi additionelle inversant le sens de marche (24).

2. Dégrilleur selon revendication 1, **caractérisé en ce qu'** une section supérieure de la tôle de rejet (18) est prévue entre la station de renvoi additionelle d'un quart de cercle (17) et la station de renvoi supérieure (19) et une section inférieure de la tôle de rejet (21) en-dessous de la section du parcours des chaînes, laquelle est principalement horizontale, entre la station de renvoi supérieure (19) et la station de renvoi inversant le sens de marche (24).

3. Dégrilleur selon les revendications 1 et 2, **caractérisé en ce que** la section supérieure de la tôle de rejet (18) enchevauche la section inférieure de la tôle de rejet (21).

4. Dégrilleur selon une des revendications 1 à 3, **caractérisé en ce que** le moteur d'entraînement pour les chaînes sans fin (13) est monté auprès de la station de renvoi supérieure (19).

5. Dégrilleur selon revendication 4, **caractérisé en ce que** les chaînes sans fin (13) sont dirigées par-dessus des roues à chaîne (20) à la station d'entraînement (19).

6. Dégrilleur selon revendication 5, **caractérisé en ce que** les chaînes sans fin (13) sont pourvues des poulies (15) et qu'elles sont dirigées le long des coulisses en arc (14, 17, 24) aux autres stations de renvoi.

7. Dégrilleur selon revendication 6, **caractérisé en ce que** la station de renvoi additionelle (24), inversant le sens de marche, peut être ajustée vers l'intérieur afin de contrôler la tension des chaînes sans fin (13).

8. Dégrilleur selon les revendications 1 à 8, **caractérisé en ce que'** une tôle de rejet additionelle (22) est prévue en-dessous de la station de renvoi arrière (19), débouchant sur la tôle de rejet inférieure (21).

9. Dégrilleur selon revendication 8, **caractérisé par** une brosse (31) prévue derrière la station de renvoi supérieure (19), positionnée en-dessus des chaînes sans fin (13) et logée par l'intermédiaire des bras pivotants (32) dans un logement inférieur (33) facilitant l'entraînement de la brosse jusqu'au moment du dégagement des pointes des râteaux.

10. Dégrilleur selon revendication 9, **caractérisé par** un ressort de rappel (34) pour les bras pivotants (32).
